# FASCICULE DE BREVET EUROPEEN

(11) **EP 3 112 263 B1**
(45) Date de publication et mention de la délivrance du brevet: **20.11.2019**
(21) Numéro de dépôt: 16177019.3
(22) Date de dépôt: 29.06.2016
(51) Int. Cl.: B64C 25/36, B60B 35/02, C25D 3/56, B60B 35/04, C21D 3/06, C25D 5/36, C25D 5/48, C22C 18/00, C23C 22/06, C23C 22/78, C23C 22/82

(54) **TIGES D'ATTERRISSEUR POUR AÉRONEFS REVÊTUES D'ALLIAGE DE ZINC ET DE NICKEL**
FAHRWERKSACHSEN FÜR LUFTFAHRZEUGE, DIE MIT EINER ZINK-NICKEL-LEGIERUNG BESCHICHTET SIND
AIRCRAFT LANDING GEAR AXLES COATED IN ZINC-NICKEL ALLOY

(30) Priorité: 03.07.2015 FR 1556302
(43) Date de publication de la demande: 04.01.2017
(73) Titulaire: Safran Landing Systems, 78140 Vélizy-Villacoublay (FR)
(72) Inventeur: MIERZEJEWSKI, Sacha, 78140 VELIZY-VILLACOUBLAY (FR); OTTENIO, Romain, 78140 VELIZY-VILLACOUBLAY (FR)
(74) Mandataire: Lavialle, Bruno François Stéphane

(56) Documents cités:
- EP-A2- 2 143 635
- US-A- 2 192 281
- US-A1- 2008 131 721
- Mark F Mosser ET AL: "Metallic-Ceramic Coatings as Replacements for Cadmium Plating", 26th Annual Aerospace/Airline Plating & Metal Finishing Forum & Exposition, Tulsa, Oklahoma, April 23-26, 1990, 26 avril 1990 (1990-04-26), XP055273370, Extrait de l'Internet: URL:http://citeseerx.ist.psu.edu/viewdoc/d ownload?doi=10.1.1.404.8960&rep=rep1&type= pdf [extrait le 2016-05-18]
- Erin N Beck: "Joint Test Report for Execution of Phase I of "HIGH STRENGTH STEEL JOINT TEST PROTOCOL FOR VALIDATION OF ALTERNATIVES TO LOW HYDROGEN EMBRITTLEMENT CADMIUM FOR HIGH STRENGTH STEEL LANDING GEAR AND COMPONENT APPLICATION - OF JULY 2003"", Technical Report NAWCADPAX/TR-2006/164, Naval Air Warfare Center Aircraft Division, Maryland, USA, 10 janvier 2007 (2007-01-10), XP055273377, Extrait de l'Internet: URL:1http://db.materialoptions.com/ASETSDe fense/SEDB/Cd_Alts/Qual_Eng_Data/Reports/C d_Alts_High_Strength_Steel_Phase1_Report_2 006_164.pdf [extrait le 2016-05-18]
- Bruce D Sartwell ET AL: "Status of HCAT/JG-PP Program on Replacement of Hard Chrome Plating With HVOF Thermal Spray Coatings on Landing Gear", Proceedings of AESF Aerospace Plating and Metal Finishing Forum, March 2000, 1 mars 2000 (2000-03-01), pages 131-139, XP055273379, Extrait de l'Internet: URL:http://infohouse.p2ric.org/ref/26/2535 0.pdf [extrait le 2016-05-18]
- Stephen : Gaydos: "Evaluation of Dipsol IZ-C17 LHE Zinc-Nickel Plating", HCAT/JCAT Meeting, 24 janvier 2007 (2007-01-24), XP055273593, Extrait de l'Internet: URL:http://www.asetsdefense.org/documents/ Workshops/ReplacementofHardChromeandCadmiu mPlating07/29. Gaydos Evaluation of Dipsol IZ C17.pdf [extrait le 2016-05-19]

## Description

L'invention concerne essentiellement le domaine des tiges d'atterrisseurs pour aéronefs et des procédés de fabrication de telles tiges d'atterrisseurs.

### ARRIERE PLAN DE L'INVENTION

Un atterrisseur pour aéronef s'étend depuis une structure de l'aéronef pour supporter des roues permettant de supporter l'aéronef durant des phases de roulage, décollage et atterrissage de l'aéronef. Un tel atterrisseur présente une tige devant être suffisamment résistante pour soutenir l'aéronef. Certaines au moins des roues de l'atterrisseur sont équipées de freins pour freiner ces roues.

On a constaté que la durée de vie d'une tige et sa résistance dans le temps dépend en particulier de sa résistance à la corrosion.

Pour améliorer cette résistance à la corrosion, on utilise systématiquement des revêtements anticorrosion tels que du cadmium, cf. Mark F. Mosser, "Metallic-Ceramic Coatings as Replacements for Cadmium Plating",26th Annual Aerospace/Airline Plating & Métal Finishing Forum & Exposition, Tulsa, Oklahoma, April 23-26, 1990, (XP055273370).

Toutefois, on s'aperçoit que malgré l'usage de ces protections anticorrosion, la tige d'atterrisseur peut subir des fragilisations en particulier au niveau des essieux portant les roues équipées de freins.

### OBJET DE L'INVENTION

Un objet de la présente invention est de fournir une tige d'atterrisseur alternative aux tiges d'atterrisseurs de l'art antérieur et présentant une résistance à la corrosion.

### RESUME DE L'INVENTION

A cette fin, selon un premier aspect de l'invention, il est proposé une tige d'atterrisseur pour aéronef selon la revendication 1.

La tige d'atterrisseur selon l'invention est essentiellement caractérisée en ce que son axe d'essieu porte au moins une couche de revêtement en alliage de Zinc et de Nickel, cet alliage de Zinc et de Nickel comportant, en pourcentage massique de l'alliage, entre 12% et 18% de nickel, au plus 0.5% d'autres éléments que le Nickel et le zinc, le reste étant du zinc.

L'acier formant l'axe d'essieu désigne est préférentiellement un acier faiblement allié et préférentiellement un acier à haute résistance. Un acier faiblement allié est un acier dont aucun élément d'addition ne dépasse la teneur de 5% en masse de l'acier. Un acier à haute résistance est un acier avec une résistance à la traction Rm>1370Mpa (199 Ksi). De tels aciers peuvent être par exemple des nuances de 300M, AISI4340, 35NCD16.

L'axe d'essieu de l'atterrisseur est une pièce particulière en ce qu'elle subit au cours de son utilisation de nombreuses sollicitations mécaniques, par exemple lors d'impacts à l'atterrissage de l'aéronef et lors des freinages ainsi que de nombreuses vibrations lors du roulage.

Lors des cycles de freinage normaux de l'aéronef, ces sollicitations mécaniques sont accompagnées de fortes variations de température de l'axe d'essieu puisqu'il n'est pas rare que l'axe d'essieu puisse dépasser les 200°C et dans certaines zones approcher les 300°C.

Par ailleurs l'axe d'essieu qui est en acier doit être protégé contre la corrosion car le moindre début de corrosion est susceptible de donner naissance à une fragilisation pouvant constituer une amorce de fissuration évoluant au cours de la vie de l'atterrisseur. Dans des cas extrêmes la fissuration peut mener à la rupture de l'axe d'essieu.

De manière surprenante, il a été remarqué que, contrairement à d'autres types de revêtements, l'usage du revêtement précité en alliage de zinc et de nickel formé sur l'axe d'essieu en acier n'induit pas de baisse significative des caractéristiques de résistance mécanique de l'axe d'essieu lorsque celui-ci est soumis à un essai de fluage réalisé à une température élevée comprise entre 215°C et 300°C.

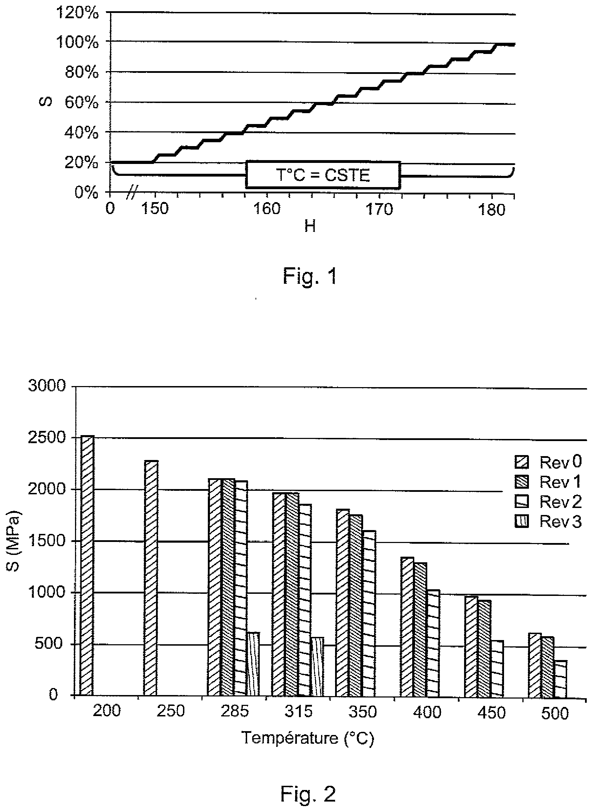

La figure 1 illustre un protocole d'essai et la figure 2 présente des résultats d'essais qui démontrent que ledit revêtement en zinc-nickel est particulièrement adapté pour protéger contre la corrosion, un axe d'essieu d'atterrisseur d'aéronef destiné à porter une roue équipée de freins générant de la chaleur.

La figure 1 illustre le déroulement d'un essai réalisé pour une éprouvette donnée en acier. Cet essai consiste à installer l'éprouvette préalablement entaillée dans une machine de traction et à soumettre cette éprouvette à un effort de traction S dont la valeur d'effort de traction croit progressivement au cours de l'essai.

La figure 1 présente une courbe d'évolution de la traction au cours du temps d'essai exprimé en heures.

Tout au long de l'essai l'éprouvette en acier est maintenue à une température donnée constante CSTE choisie parmi un groupe de températures constantes CSTE comprenant 285°C, 315°C, 350°C, 400°C, 450°C, 500°C.

Comme on le voit sur l'axe des abscisses de la figue 1, la durée de l'essai peut aller jusqu'à 180 heures voir au-delà.

Sur l'axe des ordonnées, la traction S appliquée sur l'éprouvette pendant la durée de l'essai, varie entre de 20% et 100% de la limite à la rupture d'une éprouvette type nue, c'est-à-dire une éprouvette ne présentant aucun revêtement.

Pendant les 150 premières heures de l'essai, l'éprouvette testée est soumise à une traction S égale à 20% de sa limite à la rupture.

Puis, la traction va en augmentant progressivement par niveaux additionnels de 5% chaque deux heures d'essai jusqu'à atteindre 100% de la limite à la rupture de l'éprouvette nue. Ainsi, vers 180 heures d'essai, l'éprouvette testée est soumise à 100% de la limite à la rupture d'une éprouvette type nue.

On a constaté que dans tous les cas où le revêtement appliqué sur l'éprouvette diffuse dans le substrat acier de l'éprouvette, l'éprouvette testée rompt avant d'atteindre 100% de la valeur limite à la rupture d'une même éprouvette nue. Un abattement important de la résistance d'une éprouvette revêtue lors d'un essai de fluage à haute température démontre que le revêtement n'est pas adapté à une utilisation pour protéger un axe d'essieu d'aéronef contre la corrosion.

De manière surprenante, sur la plage de températures d'essais allant de 200°C à 300°C, on a constaté qu'il n'y a pas de traces de diffusion de l'alliage Zn-Ni dans le substrat en acier y compris lorsque ce substrat est fortement sollicité mécaniquement à la manière des sollicitations subies par un axe d'essieu d'aéronef portant des roues équipées de freins.

La figure 2 présente les résultats d'essais menés sur plusieurs éprouvettes en acier conformément au protocole d'essai illustré à la figure 1.

L'axe des ordonnées de la figure 2 indique les différentes températures constantes CSTE qui ont été respectivement choisies pour chacun des essais.

L'axe des ordonnées présente une valeur en Mpa de la limite à la rupture atteinte par une éprouvette donnée subissant l'essai.

La légende Rev0 désigne les résultats obtenus avec des éprouvettes nues. Ainsi avec un essai de fluage à température constante CSTE à 200°, l'éprouvette nue atteint une limite à la rupture d'environ 2 500 Mpa lorsqu'elle est soumise au protocole d'essai de la figure 1.

On constate que plus la température CSTE choisie pour l'essai augmente et plus la valeur de limite à la rupture diminue. Cette limite à la rupture d'éprouvette nue Rev0 passe d'environ 2 500Mpa à 200°C à environ 2 250Mpa à 250°C, puis environ 2 100Mpa à 285°c, environ 1 900Mpa à 315°C, environ 1 700 Mpa à 350°C, environ 1 400Mpa à 400°C, environ 950Mpa à 450°C et environ 600Mpa à 500°C.

Ainsi plus le fluage d'une éprouvette en acier est réalisé à température élevée et plus les caractéristiques mécaniques de cette éprouvette diminuent.

La légende Rev1 désigne les résultats obtenus avec des éprouvettes revêtues d'un dépôt MCAC correspondant à « metallic *ceramic* aluminum coating », c'est-à-dire revêtement organique contenant de l'aluminium métallique.

La légende Rev2 désigne les résultats obtenus avec des éprouvettes revêtues du dépôt de zinc-nickel utilisé pour la mise en œuvre de l'invention.

La légende Rev3 désigne les résultats obtenus avec des éprouvettes revêtues du dépôt de Cadmium faiblement fragilisant (Cadmium LHE, LHE correspondant à l'expression « low hydrogen embrittlement").

On constate que parmi les différents revêtements testés, le revêtement Rev1 constitué d'un dépôt MCAC et le revêtement Rev2 constitué de zinc et nickel (contenant entre 12 et 18% de nickel et plus particulièrement entre 12 et 16% de nickel) n'induisent pas de baisse significative de la résistance des éprouvettes en acier pour des températures d'essais comprises entre 285°C et 315°C.

A contrario, il est surprenant de noter que le revêtement cadmium Rev3 usuellement utilisé en aéronautique pour protéger des pièces d'atterrisseur contre de la corrosion présente, dès 285°C, un fort abattement de la résistance de l'éprouvette en acier.

Par conséquent, le revêtement de cadmium n'est pas adapté à revêtir un axe d'essieu d'atterrisseur destiné à recevoir une roue équipée de freins car il est susceptible d'induire dans l'axe des fragilisations.

Par contre, ces essais démontrent qu'il est particulièrement intéressant de protéger un axe d'essieu de tige d'atterrisseur destinée à porter une roue équipée de freins à l'aide d'un dépôt de couche de zinc nickel Rev2 conforme à l'invention. Outre son effet de protection contre la corrosion du substrat en acier, la couche d'alliage de zinc et nickel Rev2 n'induit pas de baisse significative de la résistance du substrat d'acier et elle présente en plus l'avantage de ne pas contenir de substances nocives pour l'environnement comme le chrome hexavalent contenu dans la couche de MCAC Rev1.

L'invention concerne également un atterrisseur pour aéronef comportant :
- au moins une tige d'atterrisseur, selon l'un quelconque des modes de réalisation de la tige d'atterrisseur selon l'invention ; et
- au moins une roue équipée de freins et supportée par l'essieu de ladite au moins une tige d'atterrisseur.

Lors des cycles de freinage normaux de l'aéronef à l'aide des freins équipant la roue, l'augmentation de la température des freins entraine une augmentation de la température de l'axe d'essieu. Grâce à l'invention, cette température peut dépasser 200°C et approcher 300°C sans qu'il y ait de risque additionnel de dégradation de la résistance de l'axe d'essieu du fait de la protection anticorrosion. L'atterrisseur selon l'invention présente une résistance à la corrosion sans toutefois contenir de polluant environnemental tel que du chrome hexavalent.

L'invention concerne également un procédé de fabrication d'une tige d'atterrisseur pour aéronef selon l'une quelconque des modes de réalisation de la tige selon l'invention. Ce procédé est essentiellement caractérisé en ce qu'il comporte :
- une étape de formation d'un axe d'essieu en acier; suivie
- d'une étape de dépôt sur cet axe d'essieu en acier de ladite au moins une couche de revêtement en alliage de Zinc et de Nickel, cette étape de dépôt étant réalisée en plongeant ledit au moins un axe d'essieu dans un bain alcalin contenant du zinc et du nickel sous forme d'ions et en appliquant un potentiel électrique entre une électrode plongée dans le bain et l'axe d'essieu en acier.

L'usage d'un bain alcalin permet de limiter le risque de dégradation, par attaque acide, de la tige lors du dépôt électrolytique de la couche d'alliage en Zinc et Nickel. Un tel bain alcalin peut être obtenu en versant dans le bain une solution d'hydroxyde de sodium et/ou de l'hydroxyde de potassium, du nickel sous forme de sulfate de nickel, du zinc sous forme de zincate et des agents complexant nécessaires à la complexation du zinc et du nickel comme des amines telles que du diéthylène triamine et des additifs organiques comme des brillanteurs ou des agents nivelant.

Un avantage de ce procédé de dépôt électrolytique est qu'il permet de générer sur l'acier de l'axe d'essieu et sur la partie principale de la tige d'atterrisseur, si elle en est recouverte, un revêtement en alliage de zinc et de nickel dont l'épaisseur peut être facilement adaptée zone par zone de la tige.

Typiquement, l'axe d'essieu est plongé dans le bain pour jouer le rôle d'une cathode, des anodes fixes immergées dans le bain servent à déposer sur des parties extérieures de l'axe d'essieu ne nécessitant pas d'outillage spécifique, d'autres anodes constituent des outils rapportés en vis-à-vis de zones de l'axe d'essieu qui sont difficiles d'accès, des caches et voleurs de courant peuvent être localement disposés en vis-à-vis de l'axe d'essieu pour limiter des surépaisseurs locales.

Cet outillage constitué des anodes, caches et voleurs de courant permet d'avoir une épaisseur homogène au cours du dépôt. Le temps de réalisation du dépôt et la densité de courant imposée entre les anodes et l'axe d'essieu plongé dans le bain définissant l'épaisseur finale de la couche zinc-nickel obtenue.

Ces outillages et paramètres de temps et de densité de courant sont ajustés pour obtenir une épaisseur de couche comprise entre 20 et 50 microns et préférentiellement 20 à 30 microns. Notamment via les essais précités, ainsi que par des observations au microscope électronique, on a démontré que la couche de revêtement d'alliage de Zn-Ni ne diffuse pas dans le substrat en acier lorsqu'il est soumis à une température élevée allant jusqu'à 300°C combinée à une mise en contrainte mécanique de ce même substrat allant au-delà de 2000 Mpa.

Selon un mode particulier du procédé de fabrication d'une tige d'atterrisseur selon l'invention, préalablement à l'étape de dépôt sur cet axe d'essieu en acier, on réalise une étape de préparation de surface en acier de la tige typiquement par dégraissage suivi d'une activation de surface mécanique ou chimique permettant d'améliorer l'accroche de la couche de zinc-nickel, par exemple par sablage.

Cette étape permet d'améliorer l'accroche de la couche de Zn-Ni sur l'acier.

Selon un mode particulier du procédé de fabrication de l'invention, après l'étape de dépôt on réalise une étape de passivation consistant à immerger, dans une solution d'acide contenant par exemple du chrome trivalent, les portions de la tige revêtues de la couche de revêtement en alliage de zinc et de nickel.

Cette passivation permet d'améliorer la protection anticorrosion conférée par la couche de Zn-Ni déposée sur la tige.

Selon un mode particulier du procédé de fabrication d'une tige d'atterrisseur selon l'invention, on met en œuvre une étape de dégazage d'hydrogène potentiellement occlus dans l'acier, cette étape de dégazage comprenant le placement de la tige dans un four pendant au moins 12 heures en maintenant le four à une température de 190°C à plus ou moins 14°C. Ce dégazage permet d'évacuer l'hydrogène fragilisant qui est potentiellement occlus dans le substrat d'acier.

### BREVE DESCRIPTION DES DESSINS

L'invention sera mieux comprise à la lecture de la description qui suit de modes de réalisation non limitatifs, en référence aux figures des dessins annexés parmi lesquelles :
Les figures 1 et 2 présentent les essais précités ;
Les figures 3a et 3b montrent les étapes successives permettant d'obtenir une tige d'atterrisseur 1 d'aéronef selon l'invention, l'axe d'essieu 1b étant ici intégré à la partie principale la de la tige ;
Les figures 4a, 4b, 4c, 4d présentent les étapes successives permettant d'obtenir une tige d'atterrisseur pour aéronef selon l'invention, dans un mode où l'axe d'essieu 1b est assemblé par emmanchement dans un alésage complémentaire formé au travers de la partie principale la de la tige 1.

### DESCRIPTION DETAILLEE DE L'INVENTION

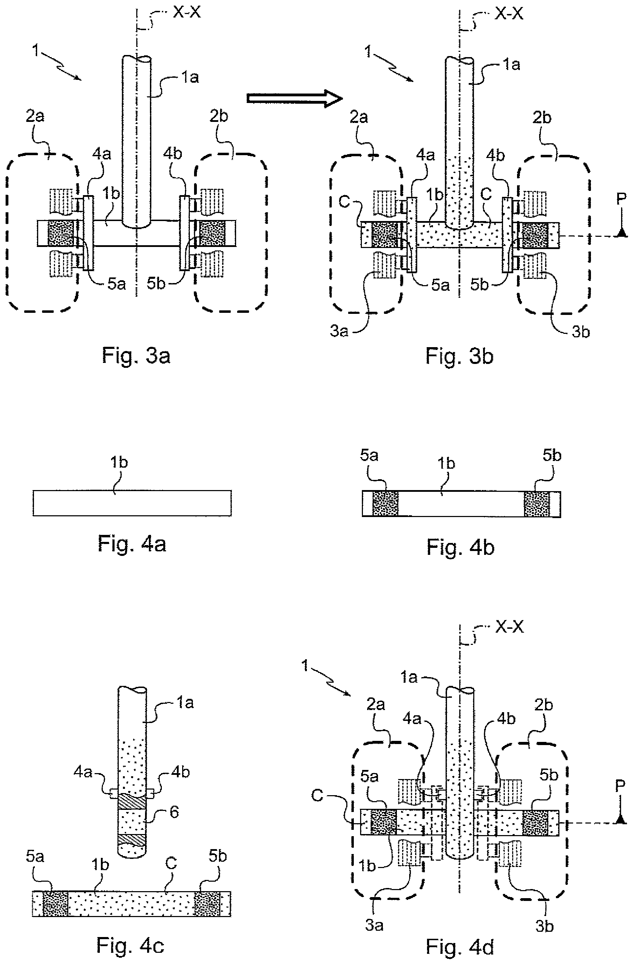

Comme on le voit sur les figures 3b et 4d, l'invention concerne une tige 1 d'atterrisseur pour aéronef comportant une partie principale la s'étendant selon un axe principal X-X de la tige 1 et comportant un axe d'essieu 1b s'étendant dans un plan P perpendiculaire à l'axe principal la de la tige 1.

Cet axe d'essieu 1b étant agencé pour supporter au moins une roue d'atterrisseur équipée de freins. En l'occurrence, sur les figures 3b et 4d, l'axe d'essieu 1b porte deux roues 2a, 2b respectivement équipées de freins 3a, 3b pour freiner les roues équipées.

L'axe d'essieu 1b est en acier portant au moins une couche de revêtement C en alliage de zinc et de nickel, cet alliage de zinc et de nickel comportant, en pourcentage massique de l'alliage, entre 12% et 18% de nickel, préférentiellement entre 12% et 16% de nickel, préférentiellement 15% de nickel à + ou - 1% près.

L'alliage comprend au plus 0.5% en masse d'autres éléments que le nickel et le zinc, ces autres éléments pouvant être des éléments volontairement ajoutés ou des impuretés. Le reste de l'alliage est constitué de Zinc. Idéalement, l'alliage ne comprend aucun autre élément d'alliage que le zinc et le nickel. Dans tous les modes de réalisation de l'alliage, celui-ci contient toujours au moins 81.5% de zinc.

La tige d'atterrisseur 1 comporte des moyens de fixation 4a, 4b de freins 3a, 3b agencés pour disposer les freins autour de l'axe d'essieu 1b afin de freiner les roues 2a, 2b de l'atterrisseur qui sont équipées de frein.

Sur les figures la et 1b, les moyens de fixation 4a, 4b comportent deux couronnes annulaires de l'axe d'essieu. Chacune de ces couronnes s'étend radialement depuis l'axe d'essieu 1b vers la périphérie de l'axe d'essieu. Chacune de ces couronnes est perforée de trous parallèles au plan P dans lequel s'étend l'essieu. Chaque frein équipant une roue comporte un rotor assujetti à la roue et un stator assujetti à une des couronnes qui lui correspond. Le stator comporte des disques sélectivement pressés par des vérins pour serrer d'autres disques qui appartiennent au rotor. Idéalement la couche d'alliage de zinc et nickel recouvre les couronnes et une portion non chromée de la partie principale de la tige. La partie principale de la tige présente une portion chromée destinée à coulisser dans un caisson de l'atterrisseur adapté à être fixé à la structure de l'aéronef. Cette portion chromée forme des portées pour des joints d'étanchéité hydraulique.

Sur les figures 4a et 4b les moyens de fixation 4a, 4b comportent des excroissances s'étendant depuis des côtés de la partie principale de la tige d'atterrisseur. Comme dans le mode de réalisation des figures la et 1b, chaque frein équipant une roue comporte un rotor assujetti à la roue et un stator assujetti à une d'excroissances de la partie principales qui lui correspond. Le stator comporte des disques sélectivement pressés par des vérins pour serrer d'autres disques qui appartiennent au rotor.

Préférentiellement, la couche de revêtement C en alliage de Zinc et de Nickel s'étend exclusivement sur des surfaces externes de l'axe d'essieu qui sont choisies pour être maintenues à une température inférieure à 300°C lorsque la tige est utilisée pour la mise en œuvre d'un cycle de freinage normal d'aéronef.

Idéalement la couche d'alliage de zinc et nickel recouvre les excroissances servant de moyens de fixation 4a, 4b ainsi que tout ou partie de la partie principale de la tige.

Un cycle de freinage normal de l'aéronef comporte tous les freinages habituels de l'aéronef qui ont lieu lors d'un roulage, d'un décollage, et d'un atterrissage de l'aéronef.

Un cycle de freinage normal ne comporte pas de freinage d'urgence susceptible de générer des dégradations importantes de la tige d'atterrisseur 1 qui nécessiteraient la dépose de la tige et son remplacement ou sa réhabilitation.

Comme on le voit sur les figures 3a, 3b, 4b, 4c, 4d, l'axe d'essieu 1b comporte au moins une portée de roulement, en l'occurrence deux portées 5a, 5b. Chaque portée 5a, 5b est agencée pour recevoir au moins une bague de roulement de roue pour orienter la roue autour de l'axe d'essieu.

Selon l'invention, chaque portée est formée par une couche annulaire de chrome formée sur une surface externe en acier de l'axe d'essieu 1b. La couche de revêtement en alliage de zinc et de nickel s'étend au moins sur toutes les surfaces en acier de l'axe d'essieu qui se trouvent en dehors des portées de roulement en chrome 5a, 5b.

La tige selon l'invention permet d'avoir des portées de roulement extrêmement dures car constituées de chrome tout en présentant une protection anticorrosion compatible à un fonctionnement de l'essieu à haute température.

Selon l'invention, chaque portée de roulement 5a, 5b en chrome s'étend entre deux bords annulaires en chrome qui lui sont propres. La couche de revêtement C en alliage de Zinc et de Nickel qui s'étend en dehors des portées 5a et 5b s'étend aussi sur les bords annulaires en chrome de chacune de ces portées 5a, 5b.

Le fait que la couche de revêtement C en alliage de zinc et de nickel recouvre tous les bords des portées en chrome permet de limiter le risque d'avoir une corrosion au niveau des bords annulaires des portées annulaires en chrome.

Idéalement, la partie principale la de la tige d'atterrisseur 1 est en acier et la couche de revêtement en alliage de Zinc et de Nickel s'étend au moins sur une portion de cette partie principale 1a, cette couche étant formée contre l'acier de la tige d'atterrisseur. On évite ainsi le risque de corrosion à l'interface entre l'essieu 1b et la partie principale la.

Enfin, alors que sur les figures 3a et 3b, la tige principale la et l'axe d'essieu 1b forment une seule et même pièce, sur les figures 4a, 4b, 4c et 4d, on voit que l'axe d'essieu 1b et la tige principale la forment deux pièces distinctes assemblées par emmanchement forcé.

Les figures 4a à 4d illustrent le procédé de fabrication de la tige d'atterrisseur en deux parties.

A la figure 4a, l'axe 1b est nu et ne porte pas encore ses portées de roulements.

Sur la figure 4b, on forme les portées de roulements 5a, 5b.

Sur la figure 4c, on voit l'axe d'essieu 1b et la partie principale la de la tige avant l'assemblage de ces pièces. Un alésage 6 est formé au travers de la partie principale la. La couche C en alliage Zn-Ni est formée sur l'axe d'essieu 1 et sur la partie principale la, y compris à l'intérieur de l'alésage 6 avant que l'axe d'essieu 1b ne soit assemblé avec la partie principale la de la tige 1.

Sur la figure 4d, on voit l'axe d'essieu 1b assemblé avec la partie principale la de la tige.

Ici, l'axe d'essieu s'étend au travers de l'alésage 6 traversant la partie principale de la tige d'atterrisseur. Cet axe d'essieu 1b est emmanché serré dans cet alésage 6 et une portion annulaire continue de la couche C de revêtement en alliage de zinc et de nickel portée par l'axe d'essieu forme une interface entre la surface annulaire interne dudit alésage 6 et une portion longitudinale de l'axe d'essieu 1b qui s'étendant dans l'alésage.

Ainsi, la portion annulaire continue de la couche C qui s'étend dans l'alésage 6 forme une interface entre l'alésage et l'acier de l'axe d'essieu. Cette interface réalise une protection anticorrosion de l'axe d'essieu tout en permettant une déformation de la couche C lors de l'emmanchement forcé de l'axe d'essieu 1b dans l'alésage 6. On limite ainsi le risque d'apparition d'espaces creux entre la surface annulaire interne de l'alésage et l'axe d'essieu. Le fait de limiter la formation de tels espaces creux limite les jeux et vibrations entre la partie principale la et l'axe d'essieu 1b ainsi que le risque de matage et d'oxydation lorsque la tige d'atterrisseur est en service. Les causes de fragilisation de la tige d'atterrisseur sont ainsi minimisées.

Enfin, comme on le voit sur la figure 4c la surface annulaire interne de l'alésage 6 peut porter une couche annulaire interne à l'alésage, cette couche annulaire interne à l'alésage étant constituée du même alliage de zinc et de nickel.

## Revendications

1. Tige (1) d'atterrisseur pour aéronef comportant une partie principale (1a) s'étendant selon un axe principal (X-X) de la tige et comportant un axe d'essieu (1b) s'étendant dans un plan (P) perpendiculaire à l'axe principal (1a) de la tige, cet axe d'essieu (1b) étant agencé pour supporter au moins une roue d'atterrisseur (2a, 2b) équipée de freins (3a, 3b) pour freiner la roue, ledit axe d'essieu (1b) étant en acier, **caractérisé en ce que** l'axe d'essieu (1b) porte au moins une couche de revêtement (C) en alliage de Zinc et de Nickel, cet alliage de Zinc et de Nickel comportant, en pourcentage massique de l'alliage, entre 12% et 18% de nickel, au plus 0.5% d'autres éléments que le Nickel et le zinc, le reste étant du zinc, l'axe d'essieu (1b) comportant au moins une portée de roulement (5a, 5b) agencée pour recevoir au moins une bague de roulement de roue, chaque dite au moins une portée (5a, 5b) étant formée par une couche annulaire de chrome formée sur une surface externe en acier de l'axe d'essieu (1b), ladite au moins une couche de revêtement en alliage de zinc et de nickel s'étendant au moins sur toutes les surfaces en acier de l'axe d'essieu qui se trouvent en dehors de ladite au moins une portée de roulement en chrome (5a, 5b) et chaque au moins une portée de roulement (5a, 5b) en chrome s'étendant entre deux bords annulaires en chrome qui lui sont propres, ladite au moins une couche de revêtement en alliage de Zinc et de Nickel s'étendant sur les bords annulaires en chrome de chaque au moins une portée de roulement.

2. Tige d'atterrisseur (1) selon la revendication précédente, dans laquelle ladite au moins une couche de revêtement (C) en alliage de Zinc et de Nickel s'étend exclusivement sur des surfaces externes de l'axe d'essieu qui sont choisies pour être maintenues à une température inférieure à 300°C lorsque la tige est utilisée pour la mise en œuvre d'un cycle de freinage normal d'aéronef.

3. Tige d'atterrisseur selon l'une quelconque des revendications précédentes, dans laquelle l'axe d'essieu (1b) s'étend au travers d'un alésage (6) traversant la partie principale de la tige d'atterrisseur, cet axe d'essieu étant emmanché serré dans cet alésage (6) et une portion annulaire continue de la couche de revêtement (C) en alliage de zinc et de nickel portée par l'axe d'essieu (1b) forme une interface entre la surface annulaire interne dudit alésage (6) et une portion longitudinale de l'axe d'essieu qui s'étend dans l'alésage (6).

4. Tige d'atterrisseur selon la revendication précédente, dans laquelle ladite surface annulaire interne de l'alésage porte une couche annulaire interne à l'alésage (6), cette couche annulaire interne à l'alésage (6) étant constituée du même alliage de zinc et de nickel.

5. Tige d'atterrisseur selon l'une quelconque des revendications 1 ou 2, dans laquelle la tige principale et l'axe d'essieu sont formés d'une seule pièce.

6. Tige d'atterrisseur selon l'une quelconque des revendications précédentes, dans laquelle l'alliage de Zinc et de Nickel comporte, en pourcentage massique de l'alliage, entre 12% et 16% de nickel.

7. Atterrisseur pour aéronef comportant :
- au moins une tige d'atterrisseur (1), selon l'une quelconque des revendications précédentes ;
- au moins une roue (2a, 2b) équipée de freins (3a, 3b) et supportée par l'essieu (1b) de ladite au moins une tige d'atterrisseur (1).

8. Procédé de fabrication d'une tige d'atterrisseur (1) pour aéronef selon l'une quelconque des revendications 1 à 6, **caractérisé en ce qu'**il comporte :
- une étape de formation d'un axe d'essieu en acier (1b); suivie
- d'une étape de dépôt sur cet axe d'essieu (1b) en acier de ladite au moins une couche de revêtement (C) en alliage de Zinc et de Nickel, cette étape de dépôt étant réalisée en plongeant ledit au moins un axe d'essieu dans un bain alcalin contenant du zinc et du nickel sous forme d'ions et en appliquant un potentiel électrique entre une électrode plongée dans le bain et l'axe d'essieu en acier.

9. Procédé de fabrication d'une tige d'atterrisseur selon la revendication 8, dans laquelle préalablement à l'une étape de dépôt sur cet axe d'essieu en acier, on réalise une étape de préparation de surface en acier de la tige comprenant un activation de surface mécanique ou chimique.

10. Procédé de fabrication d'une tige d'atterrisseur selon l'une quelconque des revendications 8 ou 9, dans laquelle après l'étape de dépôt on réalise une étape de passivation consistant à immerger, dans une solution d'acide, les portions de la tige revêtues de la couche de revêtement en alliage de zinc et de nickel.

11. Procédé de fabrication d'une tige d'atterrisseur selon l'une quelconque des revendications 8 à 10, comprenant en outre une étape de dégazage d'hydrogène potentiellement occlus dans l'acier, cette étape de dégazage comprenant le placement de la tige dans un four pendant au moins 12 heures en maintenant le four à une température de 190°C à plus ou moins 14°C.

## Patentansprüche

1. Fahrwerkstange (1) für ein Luftfahrzeug, umfassend einen Hauptteil (1a), der sich gemäß einer Hauptachse (X-X) der Stange erstreckt, und umfassend eine Radachse (1b), die sich in einer Ebene (P) erstreckt, die senkrecht zur Hauptachse (1a) der Stange ist, wobei diese Radachse (1b) ausgebildet ist, um mindestens ein Fahrwerkrad (2a, 2b) zu tragen, das mit Bremsen (3a, 3b) zum Bremsen des Rades ausgestattet ist, wobei die genannte Radachse (1b) aus Stahl ist, **dadurch gekennzeichnet, dass** die Radachse (1b) mindestens eine Überzugsschicht (C) aus einer Zink- und Nickellegierung trägt, wobei diese Zink- und Nickellegierung in Massenprozent der Legierung zwischen 12% und 18% Nickel umfasst, höchstens 0,5% andere Elemente als Nickel und Zink, wobei der Rest Zink ist, wobei die Radachse (1b) mindestens einen Lagersitz (5a, 5b) umfasst, der ausgebildet ist, um mindestens einen Lagerring des Rades aufzunehmen, wobei jeder genannte mindestens eine Sitz (5a, 5b) von einer ringförmigen Schicht aus Chrom gebildet ist, die auf einer Außenfläche aus Stahl der Radachse (1b) ausgebildet ist, wobei sich die genannte mindestens eine Überzugsschicht aus Zink- und Nickellegierung mindestens auf allen Stahlflächen der Radachse erstreckt, die sich außerhalb des genannten mindestens einen Lagersitzes (5a 5b) aus Chrom befinden, und sich jeder mindestens eine Lagersitz (5a, 5b) aus Chrom zwischen zwei ringförmigen Rändern aus Chrom erstreckt, die ihm eigen sind, wobei sich die genannte mindestens eine Überzugsschicht aus Zink- und Nickellegierung auf den ringförmigen Rändern aus Chrom jedes mindestens einen Lagersitzes erstreckt.

2. Fahrwerkstange (1) nach dem vorhergehenden Anspruch, bei der sich die genannte mindestens eine Überzugsschicht (C) aus Zink- und Nickellegierung ausschließlich auf Außenflächen der Radachse erstreckt, die gewählt sind, um auf einer Temperatur unter 300°C gehalten zu werden, wenn die Stange zum Durchführen eines normalen Bremszyklus des Luftfahrzeugs verwendet wird.

3. Fahrwerkstange nach einem der vorhergehenden Ansprüche, bei der sich die Radachse (1b) durch eine Bohrung (6) erstreckt, die den Hauptteil der Fahrwerkstange durchsetzt, wobei diese Radachse in diese Bohrung (6) fest eingepresst ist, und ein durchgehender ringförmiger Abschnitt der Überzugsschicht (C) aus Zink- und Nickellegierung, der von der Radachse (1b) getragen wird, eine Schnittstelle zwischen der inneren ringförmigen Fläche der Bohrung (6) und einem Längsabschnitt der Radachse bildet, der sich in der Bohrung (6) erstreckt.

4. Fahrwerkstange nach dem vorhergehenden Anspruch, bei dem die genannte innere ringförmige Fläche der Bohrung eine ringförmige Schicht im Inneren der Bohrung (6) trägt, wobei diese ringförmige Schicht im Inneren der Bohrung aus der gleichen Zink- und Nickellegierung gebildet ist.

5. Fahrwerkstange nach einem der Ansprüche 1 oder 2, bei der die Hauptstange und die Radachse in einem Stück ausgebildet sind.

6. Fahrwerkstange nach einem der vorhergehenden Ansprüche, bei der die Zink- und Nickellegierung in Massenprozent der Legierung zwischen 12% und 16% Nickel umfasst.

7. Fahrwerk für ein Luftfahrzeug, umfassend:
- mindestens eine Fahrwerkstange (1) nach einem der vorhergehenden Ansprüche;
- mindestens ein Rad (2a, 2b), das mit Bremsen (3a, 3b) ausgestattet ist und von der Radachse (1b) der genannten mindestens einen Fahrwerkstange (1) getragen wird.

8. Verfahren zum Herstellen einer Fahrwerkstange (1) für ein Luftfahrzeug nach einem der Ansprüche 1 bis 6, **dadurch gekennzeichnet, dass** es umfasst:
- einen Schritt des Ausbildens einer Radachse (1b) aus Stahl; gefolgt von
- einem Schritt des Aufbringens der genannten mindestens einen Überzugsschicht (C) aus Zink- und Nickellegierung auf diese Radachse (1b) aus Stahl, wobei dieser Schritt des Aufbringens dadurch erfolgt, dass die genannte mindestens eine Radachse in ein Alkalibad getaucht wird, das Zink und Nickel in Form von Ionen enthält, und ein elektrisches Potential zwischen einer Elektrode, die in das Bad getaucht wird, und der Radachse aus Stahl angelegt wird.

9. Verfahren zum Herstellen einer Fahrwerkstange nach Anspruch 8, bei dem man vor einem Schritt des Aufbringens einer Schicht auf diese Radachse aus Stahl einen Schritt des Erzeugens einer Stahlfläche der Stange durchführt, der eine mechanische oder chemische Oberflächenaktivierung umfasst.

10. Verfahren zum Herstellen einer Fahrwerkstange nach einem der Ansprüche 8 oder 9, bei dem man nach dem Schritt des Aufbringens einen Passivierungsschritt durchführt, der darin besteht, die Abschnitte der Stange, die mit der Überzugsschicht aus der Zink- und Nickellegierung überzogen sind, in eine Säurelösung einzutauchen.

11. Verfahren zum Herstellen einer Fahrwerkstange nach einem der Ansprüche 8 bis 10, ferner umfassend einen Schritt des Entgasens von potenziell in dem Stahl eingeschlossenem Wasserstoff, wobei dieser Entgasungsschritt das Platzieren der Stange in einem Ofen für mindestens 12 Stunden umfasst, während der Ofen auf einer Temperatur von 190°C plus oder minus 14°C gehalten wird.

## Claims

1. Aircraft landing gear strut (1) including:
a main part (1a) extending along a main axis (X-X) of the strut and including an axle shaft (1b) extending in a plane (P) perpendicular to the main axis (1a) of the strut, this axle shaft (1b) being adapted to support at least one landing gear wheel (2a, 2b) equipped with brakes (3a, 3b) for braking the wheel, said axle shaft (1b) being made of steel, **characterized in that** the axle shaft (1b) has at least one zinc nickel alloy coating layer (C), this zinc nickel alloy including, as a percentage by weight of the alloy, between 12% and 18% of nickel, at most 0.5% of elements other than nickel and zinc, the rest being zinc, the axle shaft (1b) including at least one bearing seat (5a, 5b) adapted to receive at least one wheel bearing race, each said at least one seat (5a, 5b) being formed by an annular layer of chrome formed on an external surface made of steel of the axle shaft (1b), said at least one zinc nickel alloy coating layer extending at least over all the steel surfaces of the axle shaft that are situated outside said at least one bearing seat (5a, 5b) made of chrome, and each at least one bearing seat (5a, 5b) made of chrome extending between two chrome annular edges specific to it, said at least one zinc nickel alloy coating layer extending over the annular edges made of chrome of each at least one bearing seat.

2. Landing gear strut (1) according to the preceding claim, in which said at least one zinc nickel alloy coating layer (C) extends exclusively over external surfaces of the axle shaft which are chosen to be kept at a temperature of below 300°C when the strut is used for performing a normal aircraft braking cycle.

3. Landing gear strut according to either one of the preceding claims, in which the axle shaft (1b) extends through a bore (6) that passes through the main part of the landing gear strut, this axle shaft being a tight fit in this bore (6), and a continuous annular portion of the zinc nickel alloy coating layer (C) borne by the axle shaft (1b) forms an interface between the internal annular surface of said bore (6) and a longitudinal portion of the axle shaft which extends into the bore (6).

4. Landing gear strut according to the preceding claim, in which said internal annular surface of the bore bears an annular layer internal to the bore (6), this annular layer internal to the bore (6) being made of the same zinc nickel alloy.

5. Landing gear strut according to either one of claims 1 or 2, in which the main strut and the axle shaft are formed as a single piece.

6. Landing gear strut according to any one of the preceding claims, in which the zinc nickel alloy contains, as a percentage by weight of the alloy, between 12% and 16% nickel.

7. Aircraft landing gear including:
- at least one landing gear strut (1) according to any one of the preceding claims;
- at least one wheel (2a, 2b) equipped with brakes (3a, 3b) and supported by the axle (1b) of said at least one landing gear strut (1).

8. Method of manufacturing an aircraft landing gear strut (1) according to any one of claims 1 to 6, **characterized in that** it includes:
- a step of forming an axle shaft (1b) made of steel; followed by
- a step of applying said at least one zinc nickel alloy coating layer (C) to this steel axle shaft (1b), this application step being performed by immersing said at least one axle shaft in an alkaline bath containing zinc and nickel in the form of ions and by applying an electrical potential between an electrode immersed in the bath and the steel axle shaft.

9. Method according to claim 8 of manufacturing a landing gear strut, in which prior to the step of applying the coating to this steel axle shaft a step of preparing a steel surface of the strut including chemical or mechanical surface activation is carried out.

10. Method according to either one of claims 8 or 9 of manufacturing a landing gear strut in which, after the coating step, a passivation step is carried out which consists in immersing the portions of the strut that are coated with the zinc nickel alloy coating layer in an acid solution.

11. Method according to any one of claims 8 to 10 of manufacturing a landing gear strut, further including a step of degassing any hydrogen potentially occluded in the steel, this degassing step involving placing the strut in a furnace for at least 12 hours, keeping the furnace at a temperature of 190°C plus or minus 14°C.
